(19) Europäisches Patentamt
European Patent Office
Office européen des brevets

(11) EP 1 214 375 B1

(12) **EUROPÄISCHE PATENTSCHRIFT**

(45) Veröffentlichungstag und Bekanntmachung des Hinweises auf die Patenterteilung:
**23.11.2005 Patentblatt 2005/47**

(21) Anmeldenummer: **00960497.6**

(22) Anmeldetag: **21.08.2000**

(51) Int Cl.[7]: **C08L 55/02**, C08F 4/40, C08F 279/04

(86) Internationale Anmeldenummer:
**PCT/EP2000/008123**

(87) Internationale Veröffentlichungsnummer:
**WO 2001/016230 (08.03.2001 Gazette 2001/10)**

(54) **THERMOPLASTISCHE FORMMASSEN AUF BASIS BESTIMMTER PFROPFKAUTSCHUKKOMPONENTEN**

THERMOPLASTIC MOLDING MATERIALS BASED ON PARTICULAR GRAFT RUBBER CONSTITUENTS

MATIERES DE MOULAGE THERMOPLASTIQUES A BASE DE CONSTITUANTS CAOUTCHOUTES GREFFES DETERMINES

(84) Benannte Vertragsstaaten:
**DE ES FR GB IT NL**

(30) Priorität: **01.09.1999 DE 19941491**

(43) Veröffentlichungstag der Anmeldung:
**19.06.2002 Patentblatt 2002/25**

(73) Patentinhaber: **LANXESS Deutschland GmbH
51369 Leverkusen (DE)**

(72) Erfinder:
- **SUN, Liqing-Lee
40489 Düsseldorf (DE)**
- **EICHENAUER, Herbert
41539 Dormagen (DE)**
- **ALBERTS, Heinrich
51519 Odenthal (DE)**

(56) Entgegenhaltungen:
**EP-A- 0 051 336**
**GB-A- 1 255 797**
**US-A- 5 700 852**
**WO-A-00/04067**
**US-A- 3 542 905**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Gegenstand der Erfindung sind thermoplastische Formmassen vom ABS-Typ bzw. vom ABS-Blend-Typ, enthaltend verbesserte Pfropfkautschukkomponenten, die durch Emulsionspolymerisation unter Verwendung spezieller Initiatorsysteme und Einhaltung definierter Reaktionsbedingungen erhalten werden.

Formmassen vom ABS-Typ sind Zweiphasenkunststoffe aus

I) einem thermoplastischen Copolymerisat insbesondere aus Styrol und Acrylnitril, in dem das Styrol ganz oder teilweise durch α-Methylstyrol oder Methylmethacrylat ersetzt werden kann; dieses Copolymerisat, auch als SAN-Harz oder Matrix-Harz bezeichnet, bildet die äußere Phase;

II) mindestens einem Pfropfpolymerisat, welches hergestellt worden ist durch Pfropfreaktion eines oder mehrerer der unter I genannten Monomeren auf Butadien - Homo - oder -Copolymerisat ("Pfropfgrundlage"). Dieses Pfropfpolymerisat ("Elastomerphase" oder "Pfropfkautschuk") bildet die disperse Phase im Matrixharz.

Zusätzlich können diese Kunststoffmischungen noch andere Polymerkomponenten wie z.B. aromatische Polycarbonatharze, Polyestercarbonatharze, Polyesterharze oder Polyamidharze enthalten, wodurch sogenannte ABS-Blend-Systeme erhalten werden.

Sowohl für ABS-Formmassen als auch für ABS-Blend-Systeme haben sich unter Verwendung von Redox-Initiatorsystemen hergestellte Pfropfkautschuke als Schlagzähmodifikatoren besonders bewährt (siehe z.B. EP 482 451 und dort zitierte Literatur), wobei in der Regel gute Zähigkeiten erzielt werden. Nachteilig ist, daß Oberflächenglanz, Reißdehnung und thermoplastische Fließfähigkeit oft nicht ausreichend sind bzw. starken Schwankungen unterliegen.

Außerdem neigen durch Redox-Initiierung hergestellte Pfropfkautschuke zu einem erhöhten Gehalt an nicht umgesetzten Monomeren, welcher zwar durch Zusatz von Metallionen (z.B. Fe-Ionen) im Reaktionsgemisch vermindert werden kann, dies jedoch zu Einbußen bei anderen Eigenschaften (z.B. Thermostabilität, Farbe des Polymeren) führt.

Es besteht daher Bedarf an Pfropfkautschuken, die diese Nachteile nicht aufweisen sowie an einem Verfahren, nach dem sich ABS- und ABS-Blend-Formmassen ohne die genannten Nachteile herstellen lassen.

Es wurde nun gefunden, daß Formmassen mit sehr gutem Oberflächenglanz, hoher Reißdehnung und guter thermoplastischer Verarbeitbarkeit ohne negative Beeinflussung der übrigen Eigenschaften erhalten werden, wenn die Herstellung des eingesetzten Pfropfkautschuks unter Verwendung spezieller Kombinationen von Initiatorsystemen und Einhaltung definierter Reaktionsbedingungen erfolgt.

Gegenstand der Erfindung sind thermoplastische Formmassen vom ABS-Typ bzw. vom ABS-Blend-Typ, enthaltend

A) mindestens ein durch radikalische Emulsionspolymerisation von harzbildenden Vinylmonomeren, vorzugsweise von Verbindungen der unten beschriebenen Formeln (I) und (II), besonders bevorzugt von Styrol und/oder Acrylnitril, wobei Styrol und/oder Acrylnitril ganz oder teilweise ersetzt werden kann durch α-Methylstyrol, Methylmethacrylat oder N-Phenylmaleinimid, in Gegenwart von in Latexform vorliegendem Kautschuk mit einer Glasübergangstemperatur <0°C unter Verwendung einer Initiatorkombination aus einer Persulfatverbindung und einem Redoxinitiatorsystem erhaltenes elastisch-thermoplastisches Pfropfpolymerisat und

B) mindestens ein Copolymerisat aus Styrol und Acrylnitril, wobei Styrol und/oder Acrylnitril ganz oder teilweise durch α-Methylstyrol oder Methylmethacrylat oder N-Phenylmaleinimid ersetzt werden kann und gegebenenfalls

C) mindestens ein Harz ausgewählt aus der Gruppe der Polycarbonate, Polyestercarbonate, Polyester und Polyamide,

dadurch gekennzeichnet, daß zu Beginn der Pfropfpolymerisationsreaktion die Persulfatverbindung in Mengen von 0,05 bis 1,5 Gew.-%, vorzugsweise von 0,08 bis 1,2 Gew.-% und besonders bevorzugt von 0,1 bis 1,0 Gew.-% (jeweils bezogen auf die bis zum Zeitpunkt der Redoxinitiator-Zugabe zudosierten Monomeren) zugesetzt wird, nach einem Monomerenzusatz von 1 bis 50 Gew.-%, vorzugsweise 2,5 bis 40 Gew.-%, besonders bevorzugt 5 bis 30 Gew.-% und ganz besonders bevorzugt 7,5 bis 25 Gew.-% (jeweils bezogen auf Gesamtmonomerenmenge) die Redoxinitiator-Komponenten in Mengen von 0,1 bis 2,5 Gew.-%, vorzugsweise von 0,2 bis 2 Gew.-% und besonders bevorzugt von 0,5 bis 1,5 Gew.-% (jeweils bezogen auf die ab dem Zeitpunkt der Redoxinitiator-Zugabe zudosierten Monomeren) zugesetzt werden.

Als Kautschuke zur Herstellung der erfindungsgemäßen elastisch-thermoplastischen Pfropfpolymerisate eignen sich im Prinzip alle in Emulsionsform vorliegenden kautschukartigen Polymerisate mit einer Glasübergangstemperatur unter 0°C.

Verwendet werden können z.B.

- Dienkautschuke, d.h. Homopolymerisate von konjugierten Dienen mit 4 bis 8 C-Atomen wie Butadien, Isopren, Chloropren oder deren Copolymerisate mit bis zu 60 Gew.-%, bevorzugt bis zu 30 Gew.-% eines Vinylmonomeren, z.B. Acrylnitril, Methacrylnitril, Styrol, α-Methylstyrol, Halogenstyrole, $C_1$-$C_4$-Alkylstyrole, $C_1$-$C_8$-Alkylacrylate, $C_1$-$C_8$-alkylmethacrylate, Alkylenglykoldiacrylate, Alkylenglykoldimethacrylate, Divinylbenzol;

- Acrylatkautschuke, d.h. Homo- und Copolymerisate von $C_1$-$C_{10}$-Alkylacrylaten, z.B. Homopolymerisate von Ethylacrylat, Butylacrylat oder Copolymerisate mit bis zu 40 Gew.-%, bevorzugt nicht mehr als 10 Gew.-% Mono-Vinylmonomeren, z.B. Styrol, Acrylnitril, Vinylbutylether, Acrylsäure(ester), Methacrylsäure(ester), Vinylsulfonsäure. Bevorzugt werden solche Acrylatkautschukhomo- bzw. -copolymerisate eingesetzt, die 0,01 bis 8 Gew.-% Divinyl- oder Polyvinylverbindungen und/oder N-Methylolacrylamid bzw. N-Methylolmethacrylamid oder sonstige Verbindungen enthalten, die als Vernetzer wirken, z.B. Divinylbenzol, Triallylcyanurat.

Bevorzugt sind Polybutadienkautschuke, SBR-Kautschuke mit bis zu 30 Gew.-% einpolymerisiertem Styrol und Acrylatkautschuke, besonders solche, die eine Kem-Schalen-Struktur aufweisen, z.B. wie in DE-OS 3 006 804 beschrieben.

Zur Herstellung der erfindungsgemäßen Pfropfpolymerisate kommen Latices mit mittleren Teilchendurchmessern $d_{50}$ von 0,05 bis 2,0 µm, vorzugsweise von 0,08 bis 1,0 µm und besonders bevorzugt von 0,1 bis 0,5 µm, in Betracht. Die Gelgehalte der eingesetzten Kautschuke können in weiten Grenzen variiert werden, vorzugsweise liegen sie zwischen 30 und 95 Gew.% (Bestimmung nach der Drahtkäfigmethode in Toluol (vgl. Houben-Weyl, Methoden der Organischen Chemie, Makromolekulare Stoffe, Teil 1, S.307 (1961), Thieme Verlag Stuttgart)).

Ganz besonders bevorzugt sind Mischungen von Kautschuklatices mit

a) mittleren Teilchendurchmessern $d_{50}$ <320 nm, vorzugsweise 260 bis 310 nm, und Gelgehalten ≤ 70 Gew.-%, vorzugsweise 40 bis 65 Gew.-% und

b) mittleren Teilchendurchmessern $d_{50}$ ≥ 370 nm, vorzugsweise 380 bis 450 nm, und Gelgehalten ≥ 70 Gew.-%, vorzugsweise 75 bis 90 Gew.-%.

Dabei hat der Kautschuklatex (a) vorzugsweise eine Breite der Teilchengrößenverteilung von 30 bis 100 nm, besonders bevorzugt von 40 bis 80 nm, der Kautschuklatex (b) von 50 bis 500 nm, besonders bevorzugt von 100 bis 400 nm (jeweils gemessen als $d_{90}$-$d_{10}$-Wert aus der integralen Teilchengrößenverteilung).

Die Mischungen enthalten die Kautschuklatices (a) und (b) vorzugsweise im Gewichtsverhältnis 90:10 bis 10:90, besonders bevorzugt 60:40 bis 30:70 (jeweils bezogen auf den jeweiligen Feststoffanteil der Latices).

Die mittleren Teilchendurchmesser werden mittels Ultrazentrifuge (vgl. W. Scholtan, H. Lange : Kolloid-Z. u Z. Polymere 250, S. 782-796 (1972) bestimmt.

Die angegebenen Werte für den Gelgehalt beziehen sich auf die Bestimmung nach der Drahtkäfigmethode in Toluol (vgl. Houben- Weyl, Methoden der Organischen Chemie, Makromolekulare Stoffe, Teil 1, S. 307 (1961), Thieme Verlag Stuttgart).

Die verwendeten Kautschuklatices können durch Emulsionspolymerisation hergestellt werden, die erforderlichen Reaktionsbedingungen, Hilfsstoffe und Arbeitstechniken sind grundsätzlich bekannt.

Es ist auch möglich, nach bekannten Methoden zunächst ein feinteiliges Kautschukpolymerisat herzustellen und es anschließend in bekannter Weise zur Einstellung der erforderlichen Teilchengröße zu agglomerieren. Einschlägige Techniken sind beschrieben (vgl. EP-PS 0 029 613; EP-PS 0 007 810; DD-PS 144 415; DE-AS 12 33 131; DE-AS 12 58 076; DE-OS 21 01 650; US-PS 1 379 391).

Ebenfalls kann nach der sogenannten Saatpolymerisationstechnik gearbeitet werden, bei der zunächst z.B. ein feinteiliges Butadienpolymerisat hergestellt und dann durch Weiterumsatz mit Butadien enthaltenden Monomeren zu größeren Teilchen weiterpolymerisiert wird.

Als Emulgatoren können die üblichen anionischen Emulgatoren wie Alkylsulfate, Alkylsulfonate, Aralkylsulfonate, Seifen gesättigter oder ungesättigter Fettsäuren (z.B. Ölsäure, Stearinsäure) sowie alkalischer disproportionierter oder hydrierter Abietin- oder Tallölsäure verwendet werden, vorzugsweise werden Emulgatoren mit Carboxylgruppe (z.B. Salze von $C_{10}$-$C_{18}$-Fettsäuren, disproportionierte Abietinsäure) eingesetzt.

Prinzipiell kann man Kautschukpolymerisatlatices auch herstellen durch Emulgieren von fertigen Kautschukpolymerisaten in wäßrigen Medien (vgl. japanische Patentanmeldung 55 125 102).

Als Pfropfmonomere, die in Gegenwart der in Emulsionsform vorliegenden kautschukartigen Polymerisate polymerisiert werden, sind praktisch alle Verbindungen geeignet, die in Emulsion zu thermoplastischen Harzen polymerisiert werden können, z.B. Vinylaromaten der Formel (I) oder Verbindungen der Formel (II) bzw. deren Gemische,

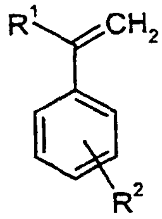

(I)

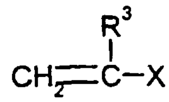

(II)

in welchen

$R^1$ Wasserstoff oder Methyl,
$R^2$ Wasserstoff, Halogen oder Alkyl mit 1 bis 4 Kohlenstoffatomen in ortho-, meta- oder para-Stellung,
$R^3$ Wasserstoff oder Methyl
und

X CN, $R^4OOC$ oder $R^5R^6NOC$ darstellt,
worin
$R^4$ Wasserstoff oder Alkyl mit 1 bis 4 Kohlenstoffatomen;
und
$R^5$ und $R^6$ unabhängig voneinander Wasserstoff, Phenyl oder Alkyl mit 1 bis 4 Kohlenstoffatomen bedeuten.

Beispiele für Verbindungen der Formel (I) sind Styrol, α-Methylstyrol, p-Methylstyrol und Vinyltoluol. Verbindungen der Formel (II) sind Acrylnitril und Methylmethacrylat. Weitere prinzipiell geeignete Monomere sind z.B. Vinylacetat und N-Phenylmaleinimid.

Bevorzugte Monomere sind Mischungen aus Styrol und Acrylnitril, α-Methylstyrol und Acrylnitril, aus Styrol, Acrylnitril und Methylmethacrylat sowie Kombinationen dieser Monomerengemische mit N-Phenylmaleinimid.

Bevorzugte erfindungsgemäße Pfropfpolymerisate A) sind solche, die durch Pfropfpolymerisation von Styrol und Acrylnitril im Gew.-Verhältnis 90:10 bis 50:50, vorzugsweise 80:20 bis 65:35 (wobei Styrol ganz oder teilweise ersetzt werden kann durch α-Methylstyrol oder Methylmethacrylat) in Gegenwart von solchen Mengen Kautschuk, vorzugsweise Polybutadien, erhalten werden, daß Pfropfpolymerisate mit Kautschukgehalten von 20 bis 80 Gew.-%, vorzugsweise 30 bis 75 Gew.-% und besonders bevorzugt 35 bis 70 Gew.-% resultieren.

Die erfindungsgemäße Herstellung der Pfropfpolymerisate A) erfolgt dabei so, daß zu Beginn der Pfropfreaktion dem Kautschuklatex bzw. dem Kautschuklatexgemisch mindestens eine Persulfatverbindung zugesetzt wird.

Geeignete Persulfatverbindungen sind beispielsweise und bevorzugt Natriumperoxodisulfat. Kaliumperoxodisulfat, Ammoniumperoxodisulfat, besonders bevorzugte Persulfatverbindung ist Kaliumperoxodisulfat.

Die Persulfarverbindung wird in Mengen von 0,05 bis 1,5 Gew.-%, vorzugsweise von 0,08 bis 1,2 Gew.-% und besonders bevorzugt von 0,1 bis 1,0 Gew.-% (jeweils bezogen auf die vor bzw. ab dem Startpunkt der Persulfatverbindungszugabe zudosierten Monomeren) zugesetzt.

Nach der anschließenden weiteren Zudosierung der Pfropfmonomeren und nach Erreichen einer Zugabemenge von 1 bis 50 Gew.-%, vorzugsweise 2,5 bis 40 Gew.-%, besonders bevorzugt 5 bis 30 Gew.-% und ganz besonders bevorzugt 7,5 bis 25 Gew.-% (jeweils bezogen auf Gesamtmonomerenmenge) wird ein Redoxinitiatorsystem zugesetzt.

Geeignete Redoxinitiatorsysteme bestehen in der Regel aus einem organischen Oxidationsmittel und einem Reduktionsmittel, wobei im Reaktionsmedium vorzugsweise zusätzlich Schwermetallionen vorhanden sind.

Erfindungsgemäß geeignete organische Oxidationsmittel sind beispielsweise und bevorzugt Di-tert.-butylperoxid, Cumolhydroperoxid, Dicyclohexylpercarbonat, tert.-Butylhydroperoxid, p-Menthanhydroperoxid oder Mischungen hieraus, besonders bevorzugt sind Cumolhydroperoxid und tert.-Butylhydroperoxid. $H_2O_2$ kann ebenfalls verwendet werden.

Erfindungsgemäß einsetzbare Reduktionsmittel sind vorzugsweise wasserlösliche Verbindungen mit reduzierender Wirkung, vorzugsweise ausgewählt aus der Gruppe der Salze von Sulfinsäure, Salze der schwefligen Säure, Natriumdithionit, Natriumsulfit, Natriumhyposulfit, Natriumhydrogensulfit, Ascorbinsäure sowie deren Salze, Rongalit C (Natriumformaldehydsulfoxylat), Mono- und Dihydroxyaceton, Zucker (z.B. Glucose oder Dextrose), Eisen(II)-salze wie z.B. Eisen(II)-sulfat, Zinn(II)-salze wie z.B. Zinn(II)-chlorid, Titan(III)-salze wie Titan(III)-sulfat.

Besonders bevorzugte Reduktionsmittel sind Dextrose, Ascorbinsäure(salze) oder Natriumformaldehydsulfoxylat (Rongalit C).

Die Menge an Redoxinitiator-Komponente verteilt sich auf Oxidations- und Reduktionsmittel wie folgt:

Die Einsatzmenge an Oxidationsmittel beträgt im allgemeinen 0,05 bis 2,0 Gew.-%, vorzugsweise 0,1 bis 1,5 Gew.-% und besonders bevorzugt 0,2 bis 1,2 Gew.-%. Die Menge an Reduktionsmittel beträgt im allgemeinen 0,05 bis 1,5 Gew.%, vorzugsweise 0,08 bis 1,2 Gew.-% und besonders bevorzugt 0,1 bis 1,0 Gew.-%.

Üblicherweise werden sowohl die Persulfatverbindung als auch die Redoxinitiatorkomponenten in Form wäßriger Lösungen, wäßriger Emulsionen, wäßriger Suspensionen oder sonstiger wäßriger Dispersionen eingesetzt.

Danach werden die restlichen Monomeren zudosiert und zu Ende polymerisiert.

Gegenstand der Erfindung ist weiterhin ein Verfahren zur Herstellung von Pfropfkautschuken durch Emulsionspolymerisation unter Verwendung einer Initiatorkombination aus einer Persulfatverbindung und einem Redoxsystem, wobei man

i) die Pfropfmonomeren zum Kautschuklatex dosiert,

ii) zu Beginn der Pfropfpolymerisationsreaktion die Persulfatverbindung in Mengen von 0,05 bis 1,5 Gew.-% (bezogen auf die bis zum Zeitpunkt der Persulfatverbindungszugabe zudosierten Monomeren) zusetzt und

iii) nach einem Monomerenzusatz von 1 bis 50 Gew.-% (bezogen auf Gesamtmonomerenmenge) die Redoxinitiatorkomponenten in Mengen von 0,1 bis 2,5 Gew.-% (bezogen auf die ab dem Zeitpunkt der Persulfatverbindungszugabe zudosierten Monomeren) zusetzt.

Die Reaktionstemperatur bei der erfindungsgemäßen Herstellung der Pfropfkautschuke A) kann in weiten Grenzen variiert werden. Sie beträgt im allgemeinen 25°C bis 160°C, vorzugsweise 40°C bis 90°C; ganz besonders bevorzugt unterscheidet sich die Temperatur zu Beginn der Monomerendosierung von der Temperatur am Ende der Monomerendosierung um maximal 20°C, vorzugsweise maximal 10°C und besonders bevorzugt maximal 5°C.

Zusätzlich können bei der Pfropfpolymerisation Molekulargewichtsregler eingesetzt werden, vorzugsweise in Mengen von 0,05 bis 2 Gew.-%, besonders bevorzugt in Mengen von 0,1 bis 1 Gew.-% (jeweils bezogen auf Gesamtmonomermenge).

Geeignete Molekulargewichtsregler sind beispielsweise n-Dodecylmercaptan, t-Dodecylmercaptan, dimeres $\alpha$-Methylstyrol, Terpinolen sowie Mischungskombinationen aus diesen Verbindungen.

Als Emulgator bei der Pfropfpolymerisationsreaktion können die obengenannten Verbindungen eingesetzt werden.

Die Aufarbeitung des Pfropfkautschuklatex A) erfolgt durch bekannte Verfahren, beispielsweise durch Sprühtrocknung oder durch Zusatz von Salzen und/oder Säuren, Waschen der Fällprodukte und Trocknung des Pulvers.

Als Vinylharze B) werden vorzugsweise Copolymerisate des Styrols und Acrylnitrils im Gewichtsverhältnis 90:10 bis 50:50 eingesetzt, wobei Styrol und/oder Acrylnitril ganz oder teilweise durch $\alpha$-Methylstyrol und/oder Methylmethacrylat ersetzt sein kann; gegebenenfalls kann anteilmäßig bis zu 30 Gew.-% (bezogen auf Vinylharz) eines weiteren Monomeren aus der Reibe Maleinsäureanhydrid, Maleinsäureimid, N-(Cyclo)-Alkylmaleinimid, N-(Alkyl)-Phenylmaleinimid mitverwendet werden.

Die gewichtsmittleren Molekulargewichte ($\overline{M}_w$) dieser Harze lassen sich in weiten Grenzen variieren, vorzugsweise liegen sie zwischen ca. 40 000 und 200 000, besonders bevorzugt zwischen 50 000 und 150 000.

Einzelheiten zur Herstellung dieser Harze sind beispielsweise in der DE-AS 2 420 358 und der DE-AS 2 724 360 beschrieben. Durch Masse- bzw. Lösungspolymerisation sowie durch Suspensionspolymerisation hergestellte Harze haben sich besonders bewährt.

Der Anteil des elastisch-thermoplastischen Pfropfpolymerisats (A) an den erfindungsgemäßen Formmassen läßt sich in weiten Grenzen variieren; vorzugsweise beträgt er 1 bis 80 Gew.-%, besonders bevorzugt 5 bis 50 Gew.-%.

Den erfindungsgemäßen Formmassen können bei Herstellung, Aufarbeitung, Weiterverarbeitung und Endverformung die erforderlichen bzw. zweckmäßigen Additive zugesetzt werden, z.B. Antioxidantien, UV-Stabilisatoren, Peroxidzerstörer, Antistatika, Gleitmittel, Entformungsmittel, Flammschutzmittel, Füll- oder Verstärkerstoff (Glasfasern, Kohlefasem etc.) und Farbmittel.

Die Endverformung kann auf handelsüblichen Verarbeitungsaggregaten vorgenommen werden und umfaßt z.B. Spritzgußverarbeitung, Plattenextrusion mit gegebenenfalls anschließender Warmverformung, Kaltverformung, Extrusion von Rohren und Profilen oder Kalander-Verarbeitung.

Die erfindungsgemäßen Formmassen vom ABS-Typ können mit anderen Polymeren (Komponente C) vermischt werden. Geeignete Blendpartner sind beispielsweise ausgewählt aus mindestens einem Polymer, ausgewählt aus der Gruppe der Polycarbonate, Polyester, Polyestercarbonate und Polyamide.

Geeignete thermoplastische Polycarbonate und Polyestercarbonate sind bekannt (vgl. z.B. DE-AS 1 495 626,

DE-OS 2 232 877, DE-OS 2 703 376, DE-OS 2 714 544, DE-OS 3 000 610, DE-OS 3 832 396, DE-OS 3 077 934), z. B. herstellbar durch Umsetzung von Diphenolen der Formeln (III) und/oder (IV)

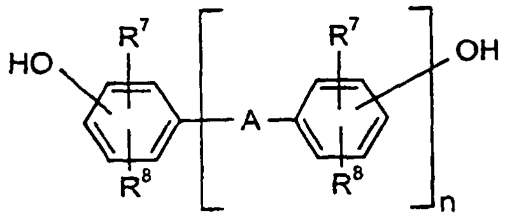

(III)

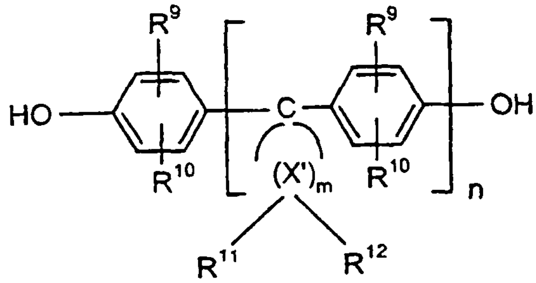

(IV)

worin

A eine Einfachbindung, $C_1$-$C_5$-Alkylen, $C_2$-$C_5$-Alkyliden, $C_5$-$C_6$-Cycloalkyl- iden, -O-, -S-, -SO-, $-SO_2-$ oder -CO- ist,

$R^7$ und $R^8$ unabhängig voneinander für Wasserstoff, Methyl oder Halogen, insbesondere für Wasserstoff, Methyl, Chlor oder Brom stehen,

$R^9$ und $R^{10}$ unabhängig voneinander Wasserstoff, Halogen bevorzugt Chlor oder Brom, $C_1$-$C_8$-Alkyl, bevorzugt Methyl, Ethyl, $C_5$-$C_6$-Cycloalkyl, bevorzugt Cyclohexyl, $C_6$-$C_{10}$-Aryl, bevorzugt Phenyl, oder $C_7$-$C_{12}$- Aralkyl, bevorzugt Phenyl-$C_1$-$C_4$-alkyl, insbesondere Benzyl, bedeuten,

m eine ganze Zahl von 4 bis 7, bevorzugt 4 oder 5 ist,

n 0 oder 1 ist,

$R^{11}$ und $R^{12}$ für jedes X individuell wählbar sind und unabhängig voneinander Wasserstoff oder $C_1$-$C_6$-Alkyl bedeuten und

X' Kohlenstoff bedeutet,

mit Kohlensäurehalogeniden, vorzugsweise Phosgen, und/oder mit aromatischen Dicarbonsäuredihalogeniden, vorzugsweise Benzoldicarbonsäuredihalogeniden, durch Phasengrenzflächen-Polykondensation oder mit Phosgen durch Polykondensation in homogener Phase (dem sogenannten Pyridinverfahren), wobei das Molekulargewicht in bekannter Weise durch eine entsprechende Menge an bekannten Kettenabbrechern eingestellt werden kann.

Geeignete Diphenole der Formeln (III) und (IV) sind z.B. Hydrochinon, Resorcin, 4,4'-Dihydroxydiphenyl, 2,2-Bis-(4-hydroxyphenyl)-propan, 2,4-Bis-(4-hydroxyphenyl)-2-methylbutan, 2,2-Bis-(4-hydroxy-3,5-dimethylphenyl)-propan, 2,2-Bis-(4-hydroxy-3,5-dichlorphenyl)-propan, 2,2-Bis-(4-hydroxy-3,5-dibromphenyl)-propan, 1,1-Bis-(4-hydroxyphenyl)-cyclohexan, 1,1-Bis-(4-hydroxyphenyl)-3,3,5-trimethylcyclohexan, 1,1-Bis-(4-hydroxyphenyl)-3,3-dimethylcyclohexan, 1,1-Bis-(4-hydroxyphenyl)-3,3,5,5-tetramethylcyclohexan oder 1,1-Bis-(4-hydroxyphenyl)-2,4,4,-trimethylcyclopentan.

Bevorzugte Diphenole der Formel (III) sind 2,2-Bis-(4-hydroxyphenyl)-propan und 1,1-Bis-(4-hydroxyphenyl)-cyclohexan, bevorzugtes Phenol der Formel (IV) ist 1,1-Bis-(4-hydroxyphenyl)-3,3,5-trimethylcyclohexan.

Es können auch Mischungen von Diphenolen eingesetzt werden.

Geeignete Kettenabbrecher sind z.B. Phenol, p-tert.-Butylphenol, langkettige Alkylphenole wie 4-(1,3-Tetramethyl-butyl)phenol gemäß DE-OS 2 842 005, Monoalkylphenole, Dialkylphenole mit insgesamt 8 bis 20 C-Atomen in den Alkylsubstituenten gemäß DE-OS 3 506 472, wie p-Nonylphenol, 2,5-di-tert.-Butylphenol, p-tert.-Octylphenol, p-Dodecylphenol, 2-(3,5-Dimethylheptyl)-phenol und 4-(3,5-Dimethylheptyl)-phenol. Die erforderliche Menge an Kettenabbrechern ist im allgemeinen 0,5 bis 10 Mol-%, bezogen auf die Summe der Diphenole (I) und (II).

Die geeigneten Polycarbonate bzw. Polyestercarbonate können linear oder verzweigt sein; verzweigte Produkte werden vorzugsweise durch den Einbau von 0,05 bis 2,0 Mol-%, bezogen auf die Summe der eingesetzten Diphenole, an drei - oder mehr als dreifunktionellen Verbindungen, z.B. solchen mit drei oder mehr als drei phenolischen OH-Gruppen, erhalten.

Die geeigneten Polycarbonate bzw. Polyestercarbonate können aromatisch gebundenes Halogen, vorzugsweise Brom und/oder Chlor, enthalten; vorzugsweise sind sie halogenfrei.

Sie haben mittlere Molekulargewichte ($\overline{M}_w$, Gewichtsmittel) bestimmt z.B. durch Ultrazentrifugation oder Streulichtmessung von 10 000 bis 200 000, vorzugsweise von 20 000 bis 80 000.

Geeignete thermoplastische Polyester sind vorzugsweise Polyalkylenterephthalate, d.h., Reaktionsprodukte aus aromatischen Dicarbonsäuren oder ihren reaktionsfähigen Derivaten (z.B. Dimethylestern oder Anhydriden) und aliphatischen, cycloaliphatischen oder arylaliphatischen Diolen und Mischungen solcher Reaktionsprodukte.

Bevorzugte Polyalkylenterephthalate lassen sich aus Terephthalsäuren (oder ihren reaktionsfähigen Derivaten) und aliphatischen oder cycloaliphatischen Diolen mit 2 bis 10 C-Atomen nach bekannten Methoden herstellen (Kunststoff-Handbuch, Band VIII. S. 695 ff, Carl Hanser Verlag, München 1973).

In bevorzugten Polyalkylenterephthalaten sind 80 bis 100, vorzugsweise 90 bis 100 Mol-% der Dicarbonsäurereste, Terephthalsäurereste und 80 bis 100, vorzugsweise 90 bis 100 Mol-% der Diolreste, Ethylenglykol- und/oder Butandiol-1,4-Reste.

Die bevorzugten Polyalkylenterephthalate können neben Ethylenglykol- bzw. Butandiol-1,4-Resten 0 bis 20 Mol-% Reste anderer aliphatischer Diole mit 3 bis 12 C-Atomen oder cycloaliphatischer Diole mit 6 bis 12 C-Atomen enthalten, z.B. Reste von Propandiol-1,3, 2-Ethylpropandiol-1,3, Neopentylglykol, Pentandiol-1,5, Hexandiol-1,6, Cyclohexandi-methanol-1,4, 3-Methylpentandiol-1,3 und -1,6, 2-Ethylhexandiol-1,3, 2,2-Diethylpropandiol-1,3, Hexandiol-2,5, 1,4-Di(β-hydroxyethoxy)-benzol, 2,2,-Bis-4-hydroxycyclohexyl)-propan, 2,4-Dihydroxy-1,1,3,3-tetramethylcyclobutan, 2,2-Bis-(3-β-hydroxyethoxyphenyl)-propan und 2,2-Bis-(4-hydroxypropoxyphenyl)-propan (DE-OS 2 407 647, 2 407 776, 2715 932).

Die Polyalkylenterephthalate können durch Einbau relativ kleiner Mengen 3- oder 4-wertiger Alkohole oder 3- oder 4-basiger Carbonsäuren, wie sie in der DE-OS 1 900 270 und der US-PS 3 692 744 beschrieben sind, verzweigt werden. Beispiele bevorzugter Verzweigungsmittel sind Trimesinsäure, Trimellithsäure, Trimethylolethan und -propan und Pentaerythrit. Es ist ratsam, nicht mehr als 1 Mol-% des Verzweigungsmittels, bezogen auf die Säurekomponente, zu verwenden.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind und Mischungen dieser Polyalkylenterephthalate.

Bevorzugte Polyalkylenterephthalate sind auch Copolyester, die aus mindestens zwei der oben genannten Alkoholkomponenten hergestellt sind: besonders bevorzugte Copolyester sind Poly-(ethylenglykolbutandiol-1,4)-terephthalate.

Die vorzugsweise geeigneten Polyalkylenterephthalate besitzen im allgemeinen eine Intrinsic-Viskosität von 0,4 bis 1,5 dl/g, vorzugsweise 0,5 bis 1,3 dl/g, insbesondere 0,6 bis 1,2 dl/g, jeweils gemessen in Phenol/o-Dichlorbenzol (1:1 Gew.-Teile) bei 25°C.

Geeignete Polyamide sind bekannte Homopolyamide, Copolyamide und Mischungen dieser Polyamide. Es können dies teilkristalline und/oder amorphe Polyamide sein.

Als teilkristalline Polyamide sind Polyamid-6, Polyamid-6,6, Mischungen und entsprechende Copolymerisate aus diesen Komponenten geeignet. Weiterhin kommen teilkristalline Polyamide in Betracht, deren Säurekomponente ganz oder teilweise aus Terephthalsäure und/oder Isophthalsäure und/oder Korksäure und/oder Sebacinsäure und/oder Azelainsäure und/oder Adipinsäure und/oder Cyclohexandicarbonsäure, deren Diaminkomponente ganz oder teilweise aus m- und/oder p-Xylylen-diamin und/oder Hexamethylendiamin und/oder 2,2,4-Trimethylhexamethylendiamin und/oder 2,2,4-Trimethylhexamethylendiamin und/oder Isophorondiamin besteht und deren Zusammensetzung prinzipiell bekannt ist.

Außerdem sind Polyamide zu nennen, die ganz oder teilweise aus Lactamen mit 7-12 C-Atomen im Ring, gegebenenfalls unter Mitverwendung einer oder mehrerer der oben genannten Ausgangskomponenten, hergestellt werden.

Besonders bevorzugte teilkristalline Polyamide sind Polyamid-6 und Polyamid-6,6 und ihre Mischungen. Als amorphe Polyamide können bekannte Produkte eingesetzt werden. Sie werden erhalten durch Polykondensation von

Diaminen wie Ethylendiamin, Hexamethylendiamin, Decamethylendiamin, 2,2,4- und/oder 2,4,4-Trimethylhexamethylendiamin, m- und/oder p-Xylylen-diamin, Bis-(4-aminocyclohexyl)-methan, Bis-(4-aminocyclohexyl)-propan, 3,3'-Dimethyl-4,4'-diamino-dicyclohexylmethan, 3-Arninomethyl,3,5,5,-trimethylcyclohexylamin, 2,5- und/oder 2,6-Bis-(aminomethyl)-norbornan und/oder 1,4-Diaminomethylcyclohexan mit Dicarbonsäuren wie Oxalsäure, Adipinsäure, Azelainsäure, Decandicarbonsäure, Heptadecandicarbonsäure, 2,2,4- und/oder 2,4,4-Trimethyladipinsäure, Isophthalsäure und Terephthalsäure.

Auch Copolymere, die durch Polykondensation mehrerer Monomerer erhalten werden, sind geeignet, ferner Copolymere, die unter Zusatz von Aminocarbonsäuren wie ε-Aminocapronsäure, ω-Aminoundecansäure oder ω-Aminolaurinsäure oder ihren Lactamen, hergestellt werden.

Besonders geeignete amorphe Polyamide sind die Polyamide hergestellt aus Isophthalsäure, Hexamethylendiamin und weiteren Diaminen wie 4,4'-Diaminodicyclohexylmethan, Isophorondiamin, 2,2,4- und/oder 2,4,4-Trimethylhexamethylendiamin, 2,5- und/oder 2,6-Bis-(aminomethyl)-norbomen; oder aus Isophthalsäure, 4,4'-Diaminodicyclohexylmethan und ε-Caprolactam; oder aus Isophthalsäure, 3,3'-Dimethyl-4,4'-diamino-dicyclohexylmethan und Laurinlactam; oder aus Terephthalsäure und dem Isomerengemisch aus 2,2,4- und/oder 2,4,4-Trimethylhexamethylendiamin.

Anstelle des reinen 4,4'-Diaminodicyclohexylmethans können auch Gemische der stellungsisomeren Diaminodicyclohexylmethane eingesetzt werden, die sich zusammensetzen aus

70 bis 99 Mol-% des 4,4'-Diamino-Isomeren
1 bis 30 Mol-% des 2,4'-Diamino-Isomeren
0 bis 2 Mol-% des 2,2'-Diamino-Isomeren und

gegebenenfalls entsprechend höher kondensierten Diaminen, die durch Hydrierung von Diaminodiphenylmethan technischer Qualität erhalten werden. Die Isophthalsäure kann bis zu 30 % durch Terephthalsäure ersetzt sein.

Die Polyamide weisen vorzugsweise eine relative Viskosität (gemessen an einer 1 gew.-%igen Lösung in m-Kresol bei 25°C) von 2,0 bis 5,0, besonders bevorzugt von 2,5 bis 4,0 auf.

Falls zusätzlich mindestens ein Polymer, ausgewählt aus der Gruppe der Polycarbonate, Polyester, Polyestercarbonate und Polyamide verwendet wird, beträgt dessen Menge bis zu 500 Gew.-Teile, vorzugsweise bis zu 400 Gew.-Teile und besonders bevorzugt bis zu 300 Gew.-Teile (jeweils bezogen auf 100 Gew.-Teile A+B).

In den folgenden Beispielen sind die angegebenen Teile immer Gewichtsteile und die angegebenen % immer Gew.-%, wenn nicht anders angegeben.

## Beispiele

Beispiel 1 (erfindungsgemäß)

58,5 Gew.-Teile (gerechnet als Feststoff) eines Polybutadienlatexgemisches (50 % mit einem mittleren Teilchendurchmesser $d_{50}$ von 423 nm und einem Gelgehalt von 82 Gew.-% und 50 % mit einem mittleren Teilchendurchmesser $d_{50}$ von 288 nm und einem Gelgehalt von 56 Gew.-%, beide hergestellt durch radikalische Polymerisation) werden mit Wasser auf einen Feststoffgehalt von ca. 20 Gew.-% gebracht, wonach auf 75°C erwärmt wird. Danach werden 0,1 Gew.-Teile Kaliumperoxodisulfat (gelöst in Wasser) zugegeben und bei 75°C innerhalb 30 Minuten 6,225 Gew.-Teile eines Monomerengemisches aus 73 Gew.-% Styrol und 27 Gew.-% Acrylnitril gleichmäßig zudosiert. Danach werden innerhalb von 210 Minuten parallel 0,26 Gew.-Teile tert.-Butylhydroperoxid, 0,22 Gew.-Teile Natriumascorbat und 35,275 Gew.-Teile eines Monomerengemisches (Styrol/Acrylnitril = 73:27) zudosiert, wobei die Temperatur bei 75°C gehalten wird. Parallel zu den Monomeren werden 1,72 Gew.-Teile (gerechnet als Festsubstanz) des Natriumsalzes eines Harzsäuregemisches (Dresinate 731, Abieta Chemie GmbH, Gersthofen, gelöst in alkalisch eingestelltem Wasser) über 4 h zudosiert.

Nach einer einstündigen Nachreaktionszeit bei 85°C wird der Latex auf 23°C abgekühlt; anschließend werden die Restmonomere gaschromatographisch nach der head space-Analysetechnik ermittelt (siehe z.B. B. Kolb in "Gaschromatographie in Bildern", Wiley-VCH, Weinheim, 1999, und dort zitierte Literatur):

| | |
|---|---|
| Styrol: | 3980 ppm |
| Acrylnitril: | 460 ppm |

Danach wird der Pfropflatex nach Zugabe von ca. 1 Gew.-Teil eines phenolischen Antioxidans mit einem Magnesiumsulfat/Essigsäure-Gemisch koaguliert und nach dem Waschen mit Wasser das resultierende Pulver bei 70°C getrocknet.

Beispiel 2 (Vergleich)

Beispiel 1 wird wiederholt, wobei nach dem Erwärmen des Polybutadienlatexgemisches auf 75°C 0,039 Gew.-Teile t-Butylhydroperoxid und 0,033 Gew.-Teile Natriumascorbat zugegeben werden und dann innerhalb von 4 h parallel 41,5 Gew.-Teile eines Monomerengemisches aus 73 Gew.-% Styrol und 27 Gew.-% Acrylnitril, 0,221 Gew.-Teile t-Butylhydroperoxid und 0,187 Gew.-Teile Natriumascorbat gleichmäßig zudosiert werden.

Zudosierung von Emulgator und weitere Behandlung erfolgt analog Beispiel 1.

Restmonomere:

| | |
|---|---|
| Styrol | 5750 ppm |
| Acrylnitril | 620 ppm |

Beispiel 3 (erfindungsgemäß)

Beispiel 1 wird wiederholt, wobei vor der Zugabe des Kaliumperoxodisulfats 6,225 Gew.-Teile des Styrol/Acrylnitril = 73:27-Monomerengemisches zum Polybutadienlatexgemisch gegeben werden und die restliche Menge des Monomerengemisches (35,275 Gew.-Teile) innerhalb von 4 h zudosiert wird.

Zugabe von Redoxinitiator, Zudosierung von Emulgator und weitere Behandlung erfolgt analog Beispiel 1.

Restmonomere:

| | |
|---|---|
| Styrol | 3290 ppm |
| Acrylnitril | 290 ppm |

Beispiel 4 (Vergleich)

Beispiel 3 wird wiederholt, wobei zu der Mischung aus Polybutadienlatexgemisch und 6,225 Gew.-Teilen Monomerengemisch kein Kaliumpersulfat zugesetzt wird und die in Beispiel 2 beschriebenen Redoxinitiator-Komponenten wie in Beispiel 2 beschrieben zugegeben werden.

Zudosierung von Emulgator und weitere Behandlung erfolgt analog Beispiel 1.

Restmonomere:

| | |
|---|---|
| Styrol | 6660 ppm |
| Acrylnitril | 970 ppm |

Herstellung und Prüfung der Formmassen

23,8 Gew.-Teile der in den Beispielen 1 bis 4 beschriebenen Pfropfpolymerisate werden mit 32,7 Gew.-Teilen eines Styrol/Acrylnitril = 72:28-Copolymerharzes ($\overline{M}_w \approx 85\,000$), 42,6 Gew.-Teilen eines linearen aromatischen Polycarbonats aus 2,2-Bis-(4-hydroxyphenyl)-propan (Bisphenol A) mit einer relativen Viskosität von 1,26 (gemessen in $CH_2Cl_2$ bei 25°C in Form einer 0,5 gew.-%igen Lösung), entsprechend einem $\overline{M}_w$ von ca. 25 000 und 0,75 Gew.-Teile Pentaerythrittetrastearat in einem Innenkneter vermischt und anschließend bei 260°C zu Prüfkörpern verarbeitet.

Die Bestimmung der Kerbschlagzähigkeit erfolgt nach Methode ISO 1801 A an Stäben der Abmessung 80 x 10 x 4 mm bei Raumtemperatur und bei -40°C.

Die Reißdehnung DR wird im Rahmen der Bestimmung des Zug-E-Moduls nach Methode ISO 527 an F 3 Schulterstäben bestimmt.

Die Schmelzefließfähigkeit MVR wird nach Methode DIN 53 753 bei 260°C (5 kg Belastung) ermittelt.

Der Oberflächenglanz wurde visuell wie folgt beurteilt:

+ einheitlich glänzende Oberfläche

o reduzierter Oberflächenglanz

- uneinheitliche Oberfläche mit glänzenden und matten Bereichen.

Wie aus Tabelle 1 ersichtlich ist, weisen die erfindungsgemäßen Formmassen verbesserte Fließfähigkeiten und bessere Glanzeigenschaften auf.

Tabelle 1

| Zusammensetzungen und Eigenschaften der Polycarbonat-ABS-Formmassen | | | | | | |
|---|---|---|---|---|---|---|
| Beispiel | Eingesetztes Pfropfpolymerisat aus Beispiel | RT $a_k$ (kJ/$m^2$) | -40°C $a_k$ (kJ/$m^2$) | DR (%) | MVR ($cm^3$/10 min) | Oberflächenglanz |
| 5 | 1 | >70 | >50 | 77 | 15,6 | + |
| 6 (Vergl.) | 2 (Vergl.) | >70 | >50 | 78 | 8,0 | 0 |
| 7 | 3 | >70 | >50 | 128 | 18,9 | + |
| 8 (Vergl.) | 4 (Vergl.) | >70 | >50 | 128 | 7,9 | - |

**Patentansprüche**

**1.** Formmasse enthaltend

A) mindestens ein durch radikalische Emulsionspolymerisation von harzbildenden Vinylmonomeren in Gegenwart von in Latexform vorliegendem Kautschuk mit einer Glasübergangstemperatur <0°C unter Verwendung einer Initiatorkombination aus einer Persulfatverbindung und einem Redoxinitiatorsystem erhaltenes elastisch-thermoplastisches Pfropfpolymerisat und

B) mindestens ein Copolymerisat aufgebaut aus Styrol und Acrylnitril und gegebenenfalls weiteren Comonomeren und gegebenenfalls

C) mindestens ein Harz ausgewählt aus der Gruppe der Polycarbonate, Polyestercarbonate, Polyester und Polyamide,

**dadurch gekennzeichnet, daß** die Herstellung des Pfropfpolymerisats A) derart erfolgt, daß zu Beginn der Pfropfpolymerisationsreaktion die Persulfatverbindung in Mengen von 0,05 bis 1,5 Gew.-% (bezogen auf die bis zum Zeitpunkt der Redoxinitiatorzugabe zudosierten Monomeren) zugesetzt wird, nach einem Monomerenzusatz von 1 bis 50 Gew.-% (bezogen auf Gesamtmonomerenmenge) die Redoxinitiatorkomponenten in Mengen von 0,1 bis 2,5 Gew.-% (bezogen auf die ab dem Zeitpunkt der Redoxinitiatorzugabe zudosierten Monomeren) zugesetzt werden.

**2.** Formmasse gemäß Anspruch 1, **dadurch gekennzeichnet, daß** die Komponente A) in Mengen von 1 bis 80 Gew.-% enthalten ist.

**3.** Formmasse gemäß Anspruch 1, **dadurch gekennzeichnet, daß** als Kautschuk ein Gemisch aus mindestens zwei Kautschuklatices mit

a) einem mittleren Teilchendurchmesser $d_{50} \leq 320$ nm und einem Gelgehalt ≤ 70 Gew.-% und

b) einem mittleren Teilchendurchmesser $d_{50} \geq 370$ nm und einem Gelgehalt ≥ 70 Gew.-% eingesetzt wird.

**4.** Formmasse gemäß Anspruch 1, **dadurch gekennzeichnet, daß** das elastischthermoplastische Pfropfpolymerisat A) einen Kautschukgehalt von 20 bis 80 Gew.-% hat.

**5.** Formmasse gemäß Anspruch 1, **dadurch gekennzeichnet, daß** die harzbildenden Monomere in Komponente A) Verbindungen der Formel (I) oder (II) oder Gemische hieraus sind:

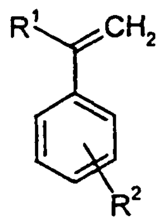

(I)

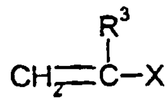

(II)

in welchen

$R^1$ Wasserstoff oder Methyl,

$R^2$ Wasserstoff, Halogen oder Alkyl mit 1 bis 4 Kohlenstoffatomen in ortho-, meta- oder para-Stellung,

$R^3$ Wasserstoff oder Methyl und

X CN, $R^4OOC$ oder $R^5R^6NOC$ darstellt, worin

$R^4$ Wasserstoff oder Alkyl mit 1 bis 4 Kohlenstoffatomen; und

$R^5$ und $R^6$ unabhängig voneinander Wasserstoff, Phenyl oder Alkyl mit 1 bis 4 Kohlenstoffatomen bedeuten.

**6.** Formmasse gemäß Anspruch 1, **dadurch gekennzeichnet, daß** das Redoxinitiatorsystem zur Herstellung des Pfropfpolymerisats A) ausgewählt wird aus Di-tert.-butylperoxid, Cumolhydroperoxid, Dicyclohexylpercarbonat, tert.-Butylhydroperoxid, p-Menthanhydroperoxid und $H_2O_2$ oder Gemische hieraus als oxidierende Komponente und mindestens einer wasserlöslichen Verbindung mit reduzierender Wirkung als reduzierende Komponente.

**7.** Formmasse gemäß Anspruch 6, wobei das Oxidationsmittel ausgewählt ist aus Cumolhydroperoxid, tert.-Butylhydroperoxid, p-Menthanhydroperoxid oder Mischungen hieraus.

**8.** Formmasse gemäß Anspruch 6, wobei das Reduktionsmittel ausgewählt ist aus Salzen von Sulfinsäure, Salzen der schwefligen Säure, Natriumdithionit, Natriumsulfit, Natriumhyposulfit, Natriumhydrogensulfit, Ascorbinsäure sowie deren Salze, Rongalit C (Natriumformaldehydsulfoxylat), Mono- und Dihydroxyaceton, Zucker, Eisen(II)-salze, Zinn(II)-salze, Titan(III)-salze.

**9.** Formmasse gemäß Anspruch 8, wobei das Reduktionsmittel ausgewählt ist aus Dextrose, Ascorbinsäure bzw. dessen Salze, Natriumformaldehydsulfoxylat oder Mischungen hieraus.

**10.** Formmasse gemäß Anspruch 1, **dadurch gekennzeichnet, daß** als Persulfatverbindung zur Herstellung des Pfropfpolymerisats A) Kaliumperoxodisulfat verwendet wird.

**11.** Formmasse gemäß Anspruch 1, **dadurch gekennzeichnet, daß** das Copolymerisat B) aufgebaut ist aus Monomeren ausgewählt aus Styrol, $\alpha$-Methylstyrol, Acrylnitril, Methylmethacrylat, Maleinsäureanhydrid, N-Phenylmaleinimid oder Mischungen daraus.

**12.** Formmasse nach Anspruch 1, enthaltend zusätzlich mindestens ein Harz, ausgewählt aus der Gruppe der Polycarbonate, Polyestercarbonate, Polyester und Polyamide.

**13.** Verfahren zur Herstellung von kautschukhaltigen Pfropfpolymerisaten durch Emulsionspolymerisation unter Verwendung einer Initiatorkombination aus einer Persulfatverbindung und einem Redoxinitiatorsystem, **dadurch gekennzeichnet, daß** man

i) die Pfropfmonomeren zum Kautschuklatex dosiert,

ii) zu Beginn der Pfropfpolymerisationsreaktion die Persulfatverbindung in Mengen von 0,05 bis 1,5 Gew.-% (bezogen auf die bis zum Zeitpunkt der Persulfarverbindungszugabe zudosierten Monomeren) zusetzt

iii) nach einem Monomerenzusatz von 1 bis 50 Gew.-% (bezogen auf Gesamtmonomerenmenge) die Redoxinitiatorkomponenten in Mengen von 0,1 bis 2,5 Gew.-% (bezogen auf die ab dem Zeitpunkt der Persulfatverbindungszugabe zudosierten Monomeren) zusetzt.

**14.** Verfahren gemäß Anspruch 10 zur Herstellung von kautschukhalfigen Pfropfpolymerisaten gemäß Anspruch 1.

**15.** Verwendung der Formmassen gemäß den Ansprüchen 1 bis 14 zur Herstellung von Formteilen.

**16.** Formteile, erhältlich aus Formmassen gemäß der Ansprüche 1 bis 14.

## Claims

**1.** Moulding composition containing

A) at least one elastic/thermoplastic graft polymer obtained by free-radical emulsion polymerisation of resin-forming vinyl monomers in the presence of rubber present in latex form having a glass transition temperature of ≤0°C using an initiator combination comprising a persulfate compound and a redox initiator system and

B) at least one copolymer synthesised from styrene and acrylonitrile and optionally further comonomers and optionally

C) at least one resin selected from the group of polycarbonates, polyestercarbonates, polyesters and polyamides,

**characterised in that** the graft polymer A) is produced in such a manner that, at the beginning of the graft polymerisation reaction the persulfate compound is added in quantities of 0.05 to 1.5 wt.% (relative to the monomers apportioned up to the time of addition of the redox initiator), after addition of 1 to 50 wt.% of the monomers (relative to the total quantity of monomers), the redox initiator components are added in quantities of 0.1 to 2.5 wt.% (relative to the monomers apportioned since the time of addition of the redox initiator).

**2.** Moulding composition according to claim 1, **characterised in that** component A) is present in quantities of 1 to 80 wt.%.

**3.** Moulding composition according to claim 1, **characterised in that** the rubber used is a mixture of at least two rubber latices having

a) an average particle diameter $d_{50}$ of ≤320 nm and a gel content of ≤70 wt.% and

b) an average particle diameter $d_{50}$ of ≥370 nm and a gel content of ≥70 wt.%.

**4.** Moulding composition according to claim 1, **characterised in that** the elastic/thermoplastic graft polymer A) has a rubber content of 20 to 80 wt.%.

**5.** Moulding composition according to claim 1, **characterised in that** the resin-forming monomers in component A) are compounds of the formula (I) or (II) or mixtures thereof:

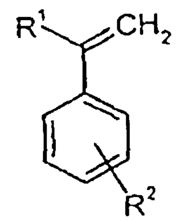 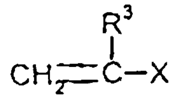

in which

$R^1$ represents hydrogen or methyl,
$R^2$ represents hydrogen, halogen or alkyl having 1 to 4 carbon atoms in ortho, meta or para position,
$R^3$ represents hydrogen or methyl
and

X represents CN, $R^4OOC$ or $R^5R^6NOC$,
in which
$R^4$ means hydrogen or alkyl having 1 to 4 carbon atoms;
and
$R^5$ and $R^6$ mutually independently mean hydrogen, phenyl or alkyl having 1 to 4 carbon atoms.

**6.** Moulding composition according to claim 1, **characterised in that** the redox initiator system for the production of the graft polymer A) is selected from di-tert.-butyl peroxide, cumene hydroperoxide, dicyclohexyl percarbonate, tert.-butyl hydroperoxide, p-menthane hydroperoxide and $H_2O_2$ or mixtures thereof as the oxidising component and at least one watersoluble compound having a reducing action as the reducing component.

**7.** Moulding composition according to claim 6, wherein the oxidising agent is selected from cumene hydroperoxide, tert.-butyl hydroperoxide, p-menthane hydroperoxide or mixtures thereof.

**8.** Moulding composition according to claim 6, wherein the reducing agent is selected from salts of sulfinic acid, salts of sulfurous acid, sodium dithionite, sodium sulfite, sodium hyposulfite, sodium hydrogen sulfite, ascorbic acid and the salts thereof, Rongalit C (sodium formaldehyde sulfoxylate), mono- and dihydroxyacetone, sugars, iron(II) salts, tin(II) salts, titanium(III) salts.

**9.** Moulding composition according to claim 8, wherein the reducing agent is selected from dextrose, ascorbic acid or the salts thereof, sodium formaldehyde sulfoxylate or mixtures thereof.

**10.** Moulding composition according to claim 1, **characterised in that** potassium peroxydisulfate is used as the persulfate compound for the production of the graft polymer A).

**11.** Moulding composition according to claim 1, **characterised in that** the copolymer B) is synthesised from monomers selected from styrene, α-methylstyrene, acrylonitrile, methyl methacrylate, maleic anhydride, N-phenylmaleimide or mixtures thereof.

**12.** Moulding composition according to claim 1 additionally containing at least one resin selected from the group of polycarbonates, polyestercarbonates, polyesters and polyamides.

**13.** Process for the production of graft polymers containing rubber by emulsion polymerisation using an initiator combination of a persulfate compound and a redox initiator system, **characterised in that**

i) the graft monomers are apportioned to the rubber latex,

ii) at the beginning of the graft polymerisation reaction the persulfate compound is added in quantities of 0.05 to 1.5 wt.% (relative to the monomers apportioned up to the time of addition of the persulfate compound)

iii) after addition of 1 to 50 wt.% of the monomers (relative to the total quantity of monomers), the redox initiator

components are added in quantities of 0.1 to 2.5 wt.% (relative to the monomers apportioned since the time of addition of the persulfate compound).

**14.** Process according to claim 10 for the production of graft polymers containing rubber according to claim 1.

**15.** Use of the moulding compositions according to any of claims 1 to 14 for the production of mouldings.

**16.** Mouldings obtainable from moulding compositions according to any of claims 1 to 14.

**Revendications**

**1.** Matière de moulage contenant

A) au moins un polymère greffé élastique-thermoplastique obtenu par polymérisation radicalaire en émulsion de monomères vinyliques formant une résine en présence de caoutchouc présent dans la forme de latex avec une température de transition vitreuse ≤ 0°C en utilisant une combinaison d'initiateurs d'un composé persulfate et d'un système d'initiateur redox et
B) au moins un copolymère constitué de styrène et d'acrylonitrile et éventuellement d'autres comonomères et éventuellement
C) au moins une résine choisie parmi les polycarbonates, les polyestercarbonates, les polyesters et les polyamides,

**caractérisée en ce que** la préparation du polymère greffé A) est réalisée de telle sorte que l'on ajoute au début de la réaction de polymérisation de greffage le composé persulfate dans des quantités de 0,05 à 1,5 % en poids (rapporté aux monomères ajoutés jusqu'à l'addition de l'initiateur redox), on ajoute, après une addition de monomères de 1 à 50 % en poids (rapporté à la quantité totale de monomères), les constituants d'initiateur redox dans des quantités de 0,1 à 2,5 % en poids (rapporté aux monomères ajoutés à partir de l'addition de l'initiateur redox).

**2.** Matière de moulage selon la revendication 1, **caractérisée en ce que** le constituant A) est contenu dans des quantités de 1 à 80 % en poids.

**3.** Matière de moulage selon la revendication 1, **caractérisée en ce que** l'on utilise comme caoutchouc un mélange d'au moins deux réseaux de caoutchouc avec

a) un diamètre moyen de particules $d_{50}$ ≤ 320 nm et une teneur en gel ≤ 70 % en poids et
b) une taille moyenne de particules $d_{50}$ ≥ 370 nm et une teneur en gel ≥ 70 % en poids.

**4.** Matière de moulage selon la revendication 1, **caractérisée en ce que** le polymère greffé élastique-thermoplastique A) présente une teneur en caoutchouc de 20 à 80 % en poids.

**5.** Matière de moulage selon la revendication 1, **caractérisée en ce que** les monomères formant une résine dans le constituant A) sont des composés de la formule (I) ou (II) ou des mélanges de ceux-ci :

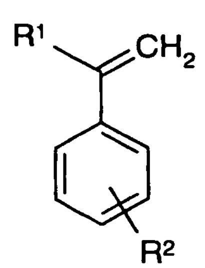

(I)

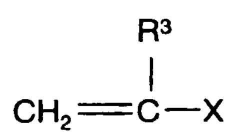

(II)

dans lesquelles

$R^1$ représente un atome d'hydrogène ou un groupe méthyle,
$R^2$ représente un atome d'hydrogène, d'halogène ou un groupe alkyle ayant de 1 à 4 atomes de carbone dans la position ortho, méta ou para,
$R^3$ représente un atome d'hydrogène ou un groupe méthyle,
et

X représente CN, $R^4OOC$ ou $R^5R^6NOC$,
où

$R^4$ représente un atome d'hydrogène ou un groupe alkyle ayant de 1 à 4 atomes de carbone ; et
$R^5$ et $R^6$ représentent indépendamment l'un de l'autre un atome d'hydrogène, un groupe phényle ou alkyle ayant de 1 à 4 atomes de carbone.

**6.** Matière de moulage selon la revendication 1, **caractérisée en ce que** le système d'initiateur redox pour la préparation du polymère greffé A) est choisi parmi le peroxyde de di-tert.-butyle, l'hydroperoxyde de cumène, le percarbonate de dicyclohexyle, l'hydroperoxyde de tert.-butyle, l'hydroperoxyde de p-menthane et $H_2O_2$ ou des mélanges de ceux-ci comme constituants oxydants et au moins un composé soluble dans l'eau avec une action réductrice comme constituant réducteur.

**7.** Matière de moulage selon la revendication 6, l'agent d'oxydation étant choisi parmi l'hydroperoxyde de cumène, l'hydroperoxyde de tert.-butyle, l'hydroperoxyde de p-menthane ou des mélanges de ceux-ci.

**8.** Matière de moulage selon la revendication 6, l'agent de réduction étant choisi parmi des sels d'acide sulfinique, des sels de l'acide sulfureux, le dithionite de sodium, le sulfite de sodium, l'hyposulfite de sodium, l'hydrogénosulfite de sodium, l'acide ascorbique ainsi que des sels de celui-ci, Rongalite C (formaldéhydesulfoxylate de sodium), la mono- et dihydroxyacétone, le sucre, des sels de fer (II), des sels d'étain (II), des sels de titane (III).

**9.** Matière de moulage selon la revendication 8, l'agent de réduction étant choisi parmi le dextrose, l'acide ascorbique respectivement des sels de celui-ci, le formaldéhydesulfoxylate de sodium ou des mélanges de ceux-ci.

**10.** Matière de moulage selon la revendication 1, **caractérisée en ce que** l'on utilise comme composé persulfate pour la préparation du polymère greffé A) du peroxodisulfate de potassium.

**11.** Matière de moulage selon la revendication 1, **caractérisée en ce que** le copolymère B) est constitué de monomères choisis parmi le styrène, l'$\alpha$-méthylstyrène, l'acrylonitrile, le méthacrylate de méthyle, l'anhydride d'acide maléique, le N-phénylmaléinimide ou des mélanges de ceux-ci.

**12.** Matière de moulage selon la revendication 1 contenant en plus au moins une résine choisie parmi les polycarbonates, les polyéthercarbonates, les polyesters et les polyamides.

**13.** Procédé pour la préparation de polymères greffés contenant du caoutchouc par polymérisation en émulsion en utilisant une combinaison d'initiateurs d'un composé persulfate et d'un système d'initiateur redox, **caractérisé en ce que**

i) on dose les monomères de greffage en un latex de caoutchouc,
ii) on ajoute au début de la réaction de polymérisation de greffage le composé persulfate dans des quantités de 0,05 à 1,5 % en poids (rapporté aux monomères ajoutés jusqu'à l'addition du composé persulfate),
iii) on ajoute, après une addition de monomères de 1 à 50 % en poids (rapporté à la quantité totale de monomères), les constituants d'initiateur redox dans des quantités de 0,1 à 2,5 % en poids (rapporté aux monomères ajoutés à partir de l'addition du composé persulfate).

**14.** Procédé selon la revendication 10 pour la préparation de polymères greffés contenant du caoutchouc selon la revendication 1.

**15.** Utilisation des matières de moulage selon les revendications 1 à 14 pour la préparation de pièces moulées.

**16.** Pièces moulées obtenues à partir de matières de moulage selon les revendications 1 à 14.